# EUROPÄISCHE PATENTSCHRIFT

(11) **EP 1 196 517 B1**
(45) Veröffentlichungstag und Bekanntmachung des Hinweises auf die Patenterteilung: **15.09.2004**
(21) Anmeldenummer: 00927126.3
(22) Anmeldetag: 03.05.2000
(51) Int. Cl.: C10M 173/02, B65G 45/22, C10N 30/00

(54) **VERFAHREN ZUR SCHMIERUNG UND ZUR REINIGUNG VON ABFÜLLANLAGEN FÜR GETRÄNKE ODER LEBENSMITTEL**
METHOD FOR LUBRICATING AND CLEANING FILLING FACILITIES FOR BEVERAGES OR FOODSTUFFS
PROCEDE POUR LUBRIFIER ET NETTOYER DES INSTALLATIONS DE REMPLISSAGE DE CONTENANTS AVEC DES BOISSONS ET DES PRODUITS ALIMENTAIRES

(30) Priorität: 12.05.1999 DE 19921709
(43) Veröffentlichungstag der Anmeldung: 17.04.2002
(73) Patentinhaber: Ecolab Inc., St. Paul, MN 55102-1390 (US)
(72) Erfinder: SCHMITZ, Karl-Heinz, D-40699 Erkrath (DE); KLUSCHANZOFF, Harald, D-40822 Mettmann (DE); WERSHOFEN, Thomas, D-41065 Mönchengladbach (DE)
(74) Vertreter: Sternagel, Fleischer, Godemeyer & Partner Patentanwälte
(86) Internationale Anmeldenummer: PCT/EP2000/003948
(87) Internationale Veröffentlichungsnummer: WO 2000/070002

(56) Entgegenhaltungen:
- WO-A-95/08497
- WO-A-98/56881
- DE-A- 3 631 953
- DE-A- 4 332 128
- DE-A- 19 642 598
- US-A- 4 960 200

## Beschreibung

Die vorliegende Erfindung betrifft ein Verfahren und eine Anlage zur Schmierung und zur Reinigung und/oder Desinfektion von Abfüllanlagen für Getränke oder Lebensmittel, wobei die Reinigung und/oder Desinfektion während des laufenden Abfüll- und Transportbetriebs erfolgt. Demnach ist es nicht mehr erforderlich, den Produktionsbetrieb nach wenigen Stunden Betriebszeit zu unterbrechen, um die Anlage zu reinigen und/oder zu desinfizieren. Die Erfindung läßt sich insbesondere einsetzen für automatische Ketten- und Bandschmieranlagen, die beim Abfüllen von Lebensmitteln, vorzugsweise Getränken, in Glas- und Kunststoffflaschen, Dosen, Gläser, Fässer, Getränkecontainer (KEG), Papier- und Kartonbehälter und dergleichen eingesetzt werden.

In Flaschenkellern und Faßkellern von Getränkebetrieben sowie bei der Abfüllung von Lebensmitteln werden für den Transport der entsprechenden Gebinde üblicherweise Transportbänder oder andere Förderanlagen benutzt, die mit geeigneten wäßrigen Schmiermittelzubereitungen über automatische Bandschmiersysteme geschmiert werden.

Hierfür werden derzeit hauptsächlich Bandschmiermittel auf Basis von Fettaminen verwendet. So beschreibt die DE-A-36 31 953 ein Verfahren zum Schmieren von kettenförmigen Flaschentransportbändern in Getränkeabfüllbetrieben, insbesondere in Brauereien, das dadurch gekennzeichnet ist, daß man die kettenförmigen Flaschentransportbänder mit Bandschmiermitteln auf Basis neutralisierter primärer Fettamine, die vorzugsweise 12 bis 18 C-Atome aufweisen und einen ungesättigten Anteil von mehr als 10 % enthalten, schmiert.

Aus der EP-A-0 372 628 sind Fettaminderivate der Formeln 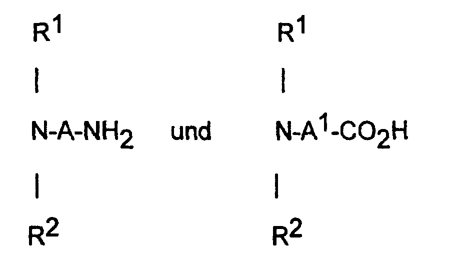 als Schmiermittel bekannt, worin
- R¹: eine gesättigte oder ungesättigte, verzweigte oder lineare Alkylgruppe mit 8 bis 22 C-Atomen;
- R²: Wasserstoff, eine Alkyl- oder Hydroxyalkylgruppe mit 1 bis 4 C-Atomen oder -A-NH₂;
- A: eine lineare oder verzweigte Alkylengruppe mit 1 bis 8 C-Atomen; und
- A¹: eine lineare oder verzweigte Alkylengruppe mit 2 bis 4 C-Atomen
bedeutet.

Darüber hinaus sind aus der DE-A-39 05 548 Schmiermittel auf Basis von N-alkylierten Fettaminderivaten bekannt, die mindestens ein sekundäres und/oder tertiäres Amin enthalten.

Aus der DE-A-42 06 506 sind bekannt:

Schmiermittel auf der Basis von amphoteren Verbindungen, primären, sekundären und/oder tertiären Aminen und/oder Salzen derartiger Amine der allgemeinen Formel (I), (IIa), (IIb), (IIIa), (IIIb), (IIIc), (IVa) und (IVb)

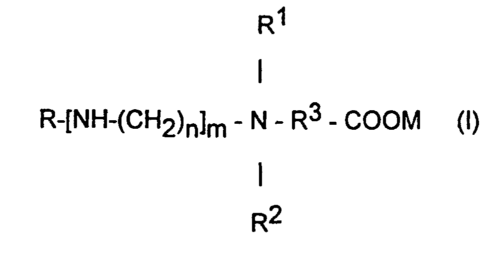

R⁴-NH-R⁵ (IIa)

R⁴-N⁺H₂-R⁵ X⁻ (IIb)

R⁴-NH-(CH₂)₃NH₂ (IIIa)

R⁴-NH-(CH₂)₃N⁺H₃X⁻ (IIIb)

R⁴-N⁺H₂-(CH₂)₃-N⁺H₃2X⁻ (IIIc)

R⁴-NR⁷R⁸ (IVa)

und/oder

R⁴-N⁺HR⁷R⁸ X⁻ (IVb)

wobei
- R: für einen gesättigten oder einfach oder mehrfach ungesättigten, linearen oder verzweigten Alkylrest mit 6 bis 22 C-Atomen, der gegebenenfalls durch -OH, -NH₂, -NH-, -CO-, -(CH₂CH₂O)ₗ- oder -(CH₂CH₂CH₂O)ₗ- substituiert sein kann,
- R¹: für Wasserstoff, einen Alkylrest mit 1 bis 4 C-Atomen, einen Hydroxyalkylrest mit 1 bis 4 C-Atomen oder einen Rest -R³COOM
- R²: nur für den Fall, daß M eine negative Ladung darstellt für Wasserstoff, einen Alkylrest mit 1 bis 4 C-Atomen, oder einen Hydroxyalkylrest mit 1 bis 4 C-Atomen,
- R³: für einen gesättigten oder einfach oder mehrfach ungesättigten, linearen-oder verzweigten Alkylrest mit 1 bis 12 C-Atomen, der gegebenenfalls durch -OH, -NH₂, -NH-, -CO-, -(CH₂CH₂O)ₗ- oder -(CH₂CH₂CH₂O)ₗ- substituiert sein kann,
- R⁴: für einen substituierten oder unsubstituierten, linearen oder verzweigten, gesättigten oder einfach oder mehrfach ungesättigten Alkylrest mit 6 bis 22 C-Atomen, der als Substituenten mindestens einen Amin-, Imin-, Hydroxy-, Halogen- und/oder Carboxyrest aufweisen kann,
einen substituierten oder unsubstituierten Phenylrest, der als Substituenten mindestens einen Amin-, Imin-, Hydroxy-, Halogen-, Carboxy- und/oder einen linearen oder verzweigten, gesättigten oder einfach oder mehrfach ungesättigten Alkylrest mit 6 bis 22 C-Atomen aufweisen kann,
- R⁵: für Wasserstoff oder - unabhängig von R⁴ - für einen Rest R⁴,
- X⁻: für ein Anion aus der Gruppe Amidosulfonat, Nitrat, Halogenid, Sulfat, Hydrogencarbonat, Carbonat, Phosphat oder R⁶-COO⁻ steht, wobei
- R⁶: für Wasserstoff, einen substituierten oder unsubstituierten, linearen oder verzweigten Alkylrest mit 1 bis 20 C-Atomen oder Alkenylrest mit 2 bis 20 C-Atomen, die als Substituenten mindestens einen Hydroxy-, Amin- oder Iminrest aufweisen können, oder einen substituierten oder unsubstituierten Phenylrest, der als Substituenten einen Alkylrest mit 1 bis 20 C-Atomen aufweisen kann, steht, und
- R⁷ und R⁸: jeweils unabhängig voneinander für einen substituierten oder unsubstituierten, linearen oder verzweigten Alkylrest mit 1 bis 20 C- Atomen oder Alkenylrest mit 2 bis 20 C-Atomen, die als Substituenten mindestens einen Hydroxy-, Amin- oder Iminrest aufweisen können, oder einen substituierten oder unsubstituierten Phenylrest, der als Substituenten einen Alkylrest mit 1 bis 20 C-Atomen aufweisen kann,
- M: für Wasserstoff, Alkalimetall, Ammonium, einen Alkylrest mit 1 bis 4 C-Atomen, einen Benzylrest oder eine negative Ladung,
- n: für eine ganze Zahl im Bereich von 1 bis 12,
- m: für eine ganze Zahl im Bereich von 0 bis 5 und
- l: für eine Zahl im Bereich von 0 bis 5 steht,
enthaltend Alkyldimethylaminoxide und/oder Alkyloligoglycoside als nichtionische Tenside.

Die EP-B-629 234 offenbart eine Schmiermittelkombination, bestehend aus
a) einer oder mehrerer Verbindungen der Formel 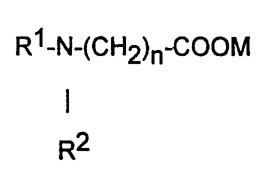 wobei
   - R¹: für einen gesättigten oder einfach oder mehrfach ungesättigten, linearen oder verzweigten Alkylrest mit 6 bis 22 C-Atomen, der gegebenenfalls durch -OH, -NH₂, -NH-, -CO-, Halogen oder einen Carboxylrest substituiert sein kann,
   - R²: für einen Carboxylrest mit 2 bis 7 C-Atomen,
   - M: für Wasserstoff, Alkalimetall, Ammonium, einen Alkylrest. mit 1 bis 4 C-Atomen oder einen Benzylrest und
   - n: für eine ganze Zahl im Bereich von 1 bis 6 steht,
b) wenigstens eine organische Carbonsäure ausgewählt aus einbasigen oder mehrbasigen, gesättigten oder einfach oder mehrfach ungesättigten Carbonsäuren mit 2 bis 22 C-Atomen,
c) gegebenenfalls Wasser und Zusatz- und/oder Hilfsstoffe.

Die WO 94/03562 beschreibt ein Schmiermittelkonzentrat auf Basis von Fettaminen und gegebenenfalls üblichen Verdünnungsmitteln oder Hilfs- bzw. Zusatzstoffen, dadurch gekennzeichnet, daß es mindestens ein Polyaminderivat eines Fettamins und/oder ein Salz eines derartigen Amins enthält, wobei der Anteil der genannten Polyaminderivate von Fettaminen an der Gesamtformulierung 1 bis 100 Gew.-% beträgt.

Gemäß einer bevorzugten Ausführungsform der WO 94/03562 enthält dieses Schmiermittelkonzentrat mindestens ein Polyaminderivat eines Fettamins der allgemeinen Formel

R-A-(CH₂)ₖ-NH-[(CH₂)ₗ-NH]_{y}-(CH₂)ₘ-NH₂ · (H⁺X⁻)ₙ

wobei
- R: ein substituierter oder unsubstituierter, linearer oder verzweigter, gesättigter oder einfach oder mehrfach ungesättigter Alkylrest mit 6 bis 22 C-Atomen, wobei die Substituenten ausgewählt sind aus Amino, Imino, Hydroxy, Halogen und Carboxy, oder
ein substituierter oder unsubstituierter Phenylrest, wobei die Substituenten ausgewählt sind aus Amino, Imino, Hydroxy, Halogen, Carboxy und einem linearen oder verzweigten, gesättigten oder einfach oder mehrfach ungesättigten Alkylrest mit 6 bis 22 C-Atomen, ist;
- A: entweder für -NH- oder für -O- steht,
- X⁻: ein Anion einer anorganischen oder organischen Säure bedeutet,
- k, l, m: unabhängig voneinander eine ganze Zahl im Bereich von 1 bis 6 ist;
- y: im Falle A = -NH- 0, 1, 2 oder 3 und
im Falle A = -O- 1, 2, 3 oder 4 ist,
- n: eine gänze Zahl von 0 bis 6 ist.

Die DE-C-42 44 536 betrifft ein Schmiermittel für Flaschentransportbänder auf wäßriger Basis, enthaltend wenigstens ein Alkyldiamin der allgemeinen Formel H₂ₙ₊₁Cₙ-NH-(CH₂)ₓ-NHR, wobei n eine Zahl zwischen 8 und 20 ist und x eine Zahl zwischen 1 und 5, und R ein Wasserstoffatom oder ein Alkylrest mit 1 bis 20 Kohlenstoffatomen ist, das Salz des Alkyldiamins und einer organischen Säure sowie gegebenenfalls eine organische Säure und wenigstens eine Ethercarbonsäure der allgemeinen Formel

H₂ₙ₊₁Cₙ(O-C₂H₅)ₓ-O-(CH₂)_{y}-COOH,

worin n eine Zahl zwischen 10 und 20, x eine Zahl zwischen 1 und 20, und y eine Zahl zwischen 0 und 5 bedeutet.

Die DE-A-36 31 953 beschreibt ein Verfahren zum Schmieren von kettenförmigen Flaschentransportbändern in Getränkeabfüllbetrieben sowie zum Reinigen der Bänder mittels eine flüssigen Reinigungsmittels, wobei man die kettenförmigen Flaschentransportbänder mit Bandschmiermitteln auf Basis neutralisierter primärer Fettamine schmiert und die Flaschentransportbänder mit kationischen Reinigungsmitteln oder organischen Säuren reinigt. Demnach wird hier ein Verfahren beschrieben, bei dem man eine aufeinander abgestimmte Produktkombination aus einem Bandschmiermittel und aus einem hierauf abgestimmten Reinigungsmittel einsetzt. Dies bedeutet jedoch, daß der Abfüll- und Transportbetrieb für den Reinigungsschritt unterbrochen werden muß.

Ein Produktinformationsblatt der Firma Diversey GmbH über das Bandschmiermittel Dicolube^{R} RS 148 gibt an, daß Transportanlagen gründlich gereinigt werden müssen, wenn von anderen Kettengleitmitteln auf dieses Produkt umgestellt werden soll. Dabei wird mitgeteilt, daß das Produkt Dicolube^{R} RS 148 bei 5 bis 10 %igen Lösungen ein geeignetes Reinigungsmittel darstellt. Diese Konzentration liegt deutlich oberhalb derjenigen, die für die Bandschmierung eingesetzt wird. Diese Produktinformation offenbart jedoch nicht, daß während des laufenden Transport- und Abfüllbetriebs die Konzentration des Bandschmiermittels für Reinigungszwecke heraufgesetzt werden kann, ohne den Produktionsbetrieb zu unterbrechen.

Die vorliegende Erfindung stellt sich demgegenüber die Aufgabe, ein Verfahren und eine Anlage zur Schmierung und zur Reinigung und/oder Desinfektion von Abfüllanlagen für Getränke oder Lebensmittel zur Verfügung zu stellen, die einen kontinuierlichen, d. h. einen über mindestens mehrere Tage andauernden, Abfüll- und Transportbetrieb ermöglichen. Damit soll der bisherige Nachteil von Bandschmierverfahren überwunden werden, daß die Transportanlagen zum Zwecke der Reinigung und / oder Desinfektion nach nur wenigen Stunden Betriebszeit angehalten und gereinigt werden müssen.

Die Erfindung betrifft in einem ersten Aspekt ein Verfahren zur Schmierung sowie zur Reinigung und/oder Desinfektion von Abfüllanlagen für Behälter zur Aufnahme von Getränken oder Lebensmittel, bei denen die Behälter über Transporteinrichtungen gefördert werden, die während des Betriebs zur Schmierung mit einer wäßrigen Lösung eines Bandschmiermittels in Kontakt gebracht werden, wobei diese wäßrige Lösung durch Verdünnen eines Produktkonzentrates mit Wasser um einen ersten Verdünnungsfaktor hergestellt wird und wobei nach vorgewählten Zeitintervallen ohne Unterbrechung des Abfüll- und Transportbetriebs die Transporteinrichtungen und/oder hiermit verbundenen Einrichtungen gereinigt und/oder desinfiziert werden, indem das Produktkonzentrat nach Verdünnen mit Wasser um einen zweiten Verdünnungsfaktor, der kleiner ist als der erste Verdünnungsfaktor, zum Reinigen und/oder Desinfizieren der Transporteinrichtungen und/oder von hiermit verbundenen Einrichtungen verwendet wird.

Dabei können die Transporteinrichtungen wie derzeit üblich ausgeführt sein und beispielsweise Transportketten, Transportbänder, Plattenförderer und ähnliches umfassen.

Ein wesentlicher Aspekt der Erfindung liegt demnach darin, daß dasselbe Produktkonzentrat eingesetzt werden kann, um die Bänder im normalen Transport- und Abfüllbetrieb zu schmieren und sie in regelmäßigen Abständen durch Erhöhen der Produktkonzentration zu reinigen und/oder zu desinfizieren, ohne daß der Abfüll- und Transportbetrieb hierzu unterbrochen werden muß. Dabei wählt man den ersten Verdünnungsfaktor zum Einstellen des Produktkonzentrats auf Schmiermittelkonzentration einerseits und den zweiten Verdünnungsfaktor zum Einstellen auf Reinigungs- und/oder Desinfektionskonzentration andererseits so, daß der erste Verdünnungsfaktor 5 bis 100 mal so groß ist wie der zweite Verdünnungsfaktor. Dies heißt, das Produktkonzentrat wird zum Einstellen auf Schmiermittelkonzentration 5 bis 100 mal stärker verdünnt als zur Einstellung auf Reinigungs- und/oder Desinfektionskonzentration. Den ersten Verdünnungsfaktor wählt man vorzugsweise in der Größenordnung 100 bis 1000, insbesondere etwa im Bereich von 300 bis 500. Den zweiten Verdünnungsfaktor stellt man vorzugsweise zwischen 10 und 100, insbesondere zwischen 30 und 50 ein.

Das zum Verdünnen des Produktkonzentrats auf Schmiermittelkonzentration verwendete Wasser hat üblicherweise die Temperatur, mit der es einer Frischwasserleitung entnommen werden kann. Für den Reinigungs- und/oder Desinfektionsschritt kann man Wasser derselben Temperatur oder erwärmtes Wasser verwenden. Allgemein kann der Reinigungs- / Desinfektionsschritt durch Verdünnen des Produktkonzentrats mit Wasser mit einer Temperatur im Bereich von 5 bis 80 °C durchgeführt werden. Der Wirkungsgrad wird jedoch verbessert, wenn man für diesen Teilschritt erwärmtes Wasser zum Verdünnen des Produktkonzentrats um den zweiten Verdünnungsfaktor verwendet. Vorzugsweise wird hierfür Wasser mit einer Temperatur im Bereich von etwa 30 bis etwa 60 °C eingesetzt.

Vorzugsweise wird für das erfindungsgemäße Verfahren ein Produktkonzentrat verwendet, das 0,5 bis 99,5 Gew.-% einer oder mehrer Schmierkomponenten ausgewählt aus Etheraminen, Etherdiaminen, Etherpolyaminen, Mono-, Di- oder Polyaminen und Imidazolderivaten mit jeweils mindestens einem Alkylrest mit 6 bis 22 C-Atomen und/oder deren Salze
und
0,5 bis 90 Gew.-% eines oder mehrerer Klarlöslichkeitsverbesserer ausgewählt aus Amphotensiden und Ethercarbonsäuren
enthält, wobei ein verbleibender Rest zu 100 Gew.-% aus Wasser und/oder weiteren Wirk- oder Hilfsstoffen besteht.

Insbesondere wird ein Produktkonzentrat eingesetzt, das 1 bis 40 Gew.-%, vorzugsweise 3 bis 20 Gew.-% einer oder mehrer Schmierkomponenten ausgewählt aus Etheraminen, Etherdiaminen, Etherpolyaminen, Mono-, Di- oder Polyaminen und Imidazolderivaten mit jeweils mindestens einem Alkylrest mit 6 bis 22 C-Atomen und/oder deren Salze
und
1 bis 50 Gew.-%, vorzugsweise 2 bis 20 Gew.-% eines oder mehrerer Klarlöslichkeitsverbesserer ausgewählt aus Amphotensiden und Ethercarbonsäuren
enthält, wobei der Rest zu 100 Gew.-% aus Wasser und/oder weiteren Wirk- oder Hilfsstoffen besteht.

Das Mengenverhältnis zwischen Schmierkomponenten und Klarlöslichkeitsverbesserer liegt bevorzugt im Bereich zwischen 0,2 : 1 bis 1 : 0,2, insbesondere zwischen 0,5 : 1 bis 1 : 0,5. Klarlöslichkeitsverbesserer sind auch als Komponenten herkömmlicher Kettengleitmittel bekannt, wo sie für eine bessere Stabilität der Anwendungslösung sorgen. Im Rahmen der vorliegenden Erfindung ermöglicht der relativ hohe Zusatz an Klarlöslichkeitsverbesserern den Einsatz des Produktkonzentrats als Schmiermittel einerseits und als Reinigungs- /Desinfektionsmittel während des Abfüllbetriebs andererseits.

Als weitere Wirk- oder Hilfsstoffe kommen insbesondere nichtionische und/oder amphotere Tenside in Betracht, beispielsweise alkoxylierte Fettamine, Fettalkohole und alkoxylierte Fettalkohole. Diese Tenside können die Benetzung der Ketten- und Plattentransportbänder verbessern, sofern dies im Einzelfall erforderlich sein sollte. Im allgemeinen sind Tensid-Zusätze im Bereich von 0,1 bis 15 Gew.-% bezogen auf das Produktkonzentrat hierfür ausreichend.

Die als Schmierkomponente dienende Aminverbindung wird vorzugsweise ausgewählt aus Verbindungen der Gruppen Etheramine, Etherdiamine, Etherpolyamine, Mono-, Di- oder Polyamine und Imidazolderivate mit jeweils mindestens einem Alkylrest mit 6 bis 22 C-Atomen und/oder deren Salze mit den allgemeinen Formeln
A)

   R-NH-(CH₂)ᵣNH₂ (1a)

   R-NH-(CH₂)ᵣ-N⁺H₃ X⁻ (1b)

   R-N⁺H₂-(CH₂)ᵣ-N⁺H₃ 2X⁻ (1c),
B)

   R-NH-[(CH₂)ᵣNH]_{y}-(CH₂)ₘ-NH₂ (2a)

   R-NH-[(CH₂)ᵣNH]_{y}-(CH₂)ₘ-NH₂ (H⁺X⁻)ₙ (2b),
C)

   R-O-[(CH₂)ᵣNH]ₚ-(CH₂)ₘ-NH₂ (3a)

   R-O-[(CH₂)ᵣNH]ₚ-(CH₂)ₘ-NH₂ (H⁺X⁻)ₙ (3b),
D)

   R-NY₂ (4)
E) 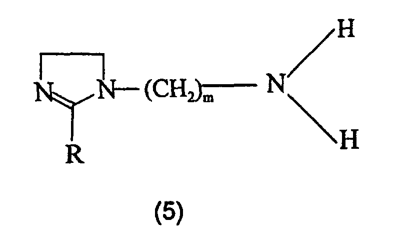 wobei die Reste R jeweils bedeuten:
   einen linearen oder verzweigten, gesättigten oder einfach oder mehrfach ungesättigten Alkylrest mit 6 bis 22 C-Atomen,
   Y unabhängig voneinander Wasserstoff oder eine Methylgruppe
   X⁻ ein Äquivalent eines Anions aus der Gruppe Amidosulfonat, Nitrat, Halogenid, Sulfat, Hydrogencarbonat, Carbonat, Phosphat oder Carboxylat bedeutet,
   m, r, y unabhängig voneinander eine ganze Zahl im Bereich von 1 bis 6,
   p null oder eine ganze Zahl im Beeich von 1 bis 6 und
   n in B) eine ganze Zahl im Bereich von 1 bis 2+y, in C) im Bereich von 1 bis 1+p darstellen.
   Die als Klarlöslichkeitsverbesserer eingesetzten Komponenten sind vorzugsweise ausgewählt aus Ethercarbonsäuren der allgemeinen Formel
F)

   H₂ₙ₊₁Cₙ-(O-CHY-CH₂)ₓ-O-(CH₂)_{y}-COOH, (6)

   wobei Y Wasserstoff oder eine Methylgruppe, n eine Zahl zwischen 10 und 20, x eine Zahl zwischen 1 und 20 und y eine Zahl zwischen 1 und 5 bedeuten
   und aus Amphotensiden der allgemeinen Formeln
G) 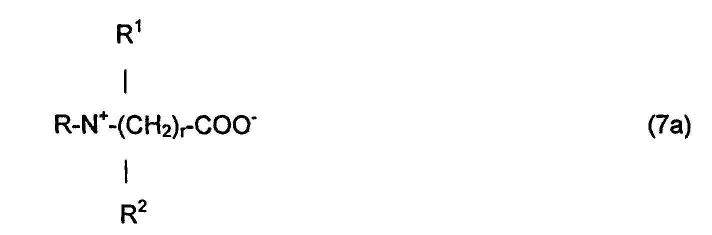 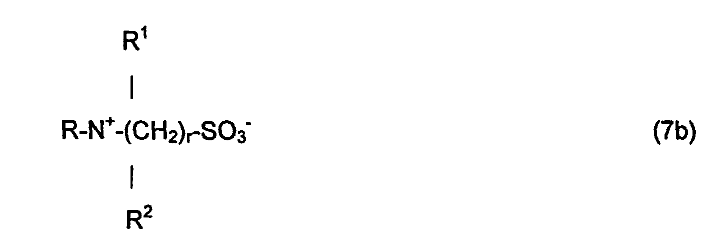 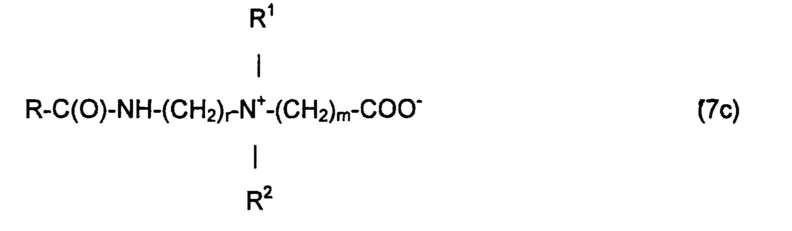 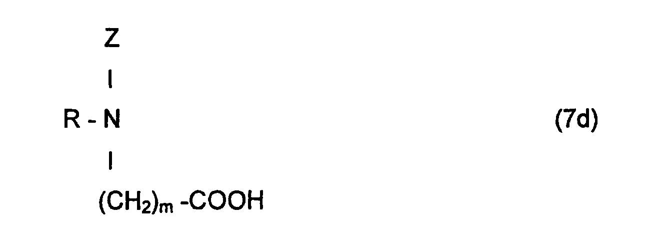 wobei die Reste R jeweils bedeuten:
   einen linearen oder verzweigten, gesättigten oder einfach oder mehrfach ungesättigten Alkylrest mit 8 bis 22 C-Atomen,
   Z für einen Rest R¹ oder eine Gruppe - (CH₂)ₘ - COOH steht,
   R¹ und R² unabhängig voneinander Wasserstoff, Methyl-, Ethyl-, Hydroxyethyl- oder Alkoxylatgruppen bedeuten
   und r und m unabhängig voneinander ganze Zahlen im Bereich 1 bis 6 darstellen.

Sowohl in den Schmierkomponenten als auch in den Klarlöslichkeitsverbesserern steht der Rest R jeweils vorzugsweise für einen linearen oder verzweigten, gesättigten oder einfach oder mehrfach umgesättigten Alkylrest mit 12 bis 22 C-Atomen. Alkylreste ab 6 C-Atome sind jedoch ebenfalls verwendbar. Als Substituenten R kommen insbesondere die folgende Reste in Frage: n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eikosyl, n-Uneikosyl und n-Docosyl sowie die verzweigtkettigten Isomere der genannten Alkylreste. Anstelle der gesättigten Alkylreste kann R auch die entsprechenden - einfach oder mehrfach - ungesättigten Alkylreste bedeuten, die gleichfalls linear oder verzweigt sein können. Die vorstehend angeführten Reste können auch substituiert sein, wobei als Substituenten eine oder mehrere Amin, Imin, Hydroxy, Halogen- oder Carboxygruppen in Frage kommen. Diese Verbindungen sind alle zum Einsatz in Bandschmiermitteln bekannt.

Sofern der Säurerest X⁻ für einen Carboxylatrest steht, stellt dieser vorzugsweise eines der folgenden Carboxylationen dar: Formiat, Acetat, Oxalat, Lactat oder ein Anion von Äpfelsäure, Weinsäure oder Citronensäure. Acetat ist besonders bevorzugt.

m, r und y stehen vorzugsweise für ganze Zahlen im Bereich von 1 bis 3. Dabei ist für r und m die Zahl 3 besonders bevorzugt, dies heißt, daß an den entsprechenden Stellen vorzugsweise Propylengruppen stehen.

In einem zweiten Aspekt betrifft die Erfindung eine Vorrichtung, mit der das erfindungsgemäße Verfahren ausgeübt werden kann. Daher betrifft die Erfindung weiterhin eine Vorrichtung zur Reinigung und/oder Desinfektion und Schmierung von Abfüllanlagen für Behälter zur Aufnahme von Getränken oder Lebensmittel, bei denen die Behälter über Transporteinrichtungen gefördert werden, enthaltend
a) eine oder mehrere Düsen zum Beaufschlagen der Oberfläche der Transporteinrichtung mit einer wäßrigen Lösung,
b) eine oder mehrere Dosierstationen, versehen mit i) mindestens einer ersten Dosierpumpe in mindestens einer Dosierstation zum Einstellen der genannten wäßrigen Lösung auf Bandschmiermittelkonzentration, ii) mindestens einer zweiten Dosierpumpe in mindestens einer Dosierstation zum Einstellen der genannten wäßrigen Lösung auf Reinigungs- und/oder Desinfektionskonzentration, oder mit mindestens einer Dosierpumpe, deren Dosierverhältnis zum Einstellen der genannten wäßrigen Lösung auf Bandschmiermittelkonzentration und Reinigungs- und/oder Desinfektionskonzentration umgestellt werden kann,
c) ein Leitungssystem zum Transport der genannten wäßrigen Lösung von der Dosierstation zu den Düsen.

Auch hierbei können die Transporteinrichtungen unterschiedlich ausgestaltet sein und beispielsweise Transportketten, Transportbänder, Plattenförderer und ähnliches umfassen. Düsen zum Beaufschlagen der Oberfläche der Transporteinrichtung mit einer wäßrigen Lösung sind üblicherweise vorhanden, da hiermit die Schmiermittellösungen aufgebracht werden. Diese Düsen können auch verwendet werden, um das auf Reinigungs- und/oder Desinfektionskonzentration eingestellte Produktkonzentrat auf die Oberfläche der Transporteinrichtung aufzubringen.

Weiterhin sieht die Einrichtung gemäß einer Alternative mindestens je eine erste Dosierpumpe in mindestens einer Dosierstation zum Einstellen der wäßrigen Lösung auf Bandschmiermittelkonzentration und mindestens eine zweite Dosierpumpe in mindestens einer Dosierstation zum Einstellen der genannten wäßrigen Lösung auf Reinigungs- und/oder Desinfektionskonzentration vor. In dieser Ausführungsform sind also mindestens zwei unterschiedliche Dosierpumpen vorgesehen, deren Dosierverhältnis jeweils voreingestellt werden kann. Dem erfindungsgemäßen Verfahren gemäß unterscheiden sich die Dosierverhältnisse um einen Faktor zwischen 5 und 100. Alternativ hierzu kann jedoch mit einer oder mehreren Dosierpumpen gearbeitet werden, deren Dosierverhältnis zum Einstellen der wäßrigen Lösung auf Bandschmiermittelkonzentration und auf Reinigungs- und/oder Desinfektionskonzentration umgestellt werden kann. Diese Dosierpumpe fördert also je nach Einstellung unterschiedliche Mengen des Produktkonzentrats. Zusätzlich enthält die Vorrichtung ein Leitungssystem, mit dem die wäßrige Lösung von der Dosierstation zu den Düsen transportiert werden kann.

Vorzugsweise enthält die Vorrichtung zusätzlich einen Wasserdurchflußmesser für das Frischwasser, das zum Bereiten der Bandschmiermittellösung oder der Reinigungs- / Desinfektionslösung verwendet wird. Hiermit können die Dosierpumpen derart eingestellt werden, daß sie proportional zum Wasserdurchfluß die jeweils erforderliche Menge an Produktkonzentrat fördern, um entweder die Bandschmiermittelkonzentration oder die Reinigungs- /Desinfektionskonzentration einzustellen.

Das Umschalten der Dosierpumpe oder der Dosierpumpen von Bandschmiermittelkonzentration auf Reinigungs- / Desinfektionskonzentration kann prinzipiell zu beliebigen Zeitpunkten von Hand erfolgen. Vorzugsweise enthält die erfindungsgemäße Vorrichtung jedoch zusätzlich eine einstellbare Zeitschaltuhr, die nach vorgewählten Zeitintervallen alternativ die erste oder die zweite Dosierpumpe an- und ausschaltet oder im Falle einer Dosierpumpe mit umstellbarem Dosierverhältnis die Einstellung der Bandschmiermittelkonzentration oder der Reinigungs- und/oder Desinfektionskonzentration steuert. Hierdurch wird ein vollständig automatischer Betrieb der Transporteinrichtung ermöglicht. Enthält die Vorrichtung beispielsweise getrennte Pumpen zur Einstellung der Bandschmiermittelkonzentration einerseits und der Reinigungs- /Desinfektionskonzentration andererseits, so kann die Zeitschaltuhr beispielsweise so eingestellt werden, daß sie für 5 Stunden und 55 Minuten lang die erste Dosierpumpe in Betrieb hält. Nach diesem Zeitinterval wird die erste Dosierpumpe ausgeschaltet und die zweite Dosierpumpe beispielsweise für ein Zeitinterval von 5 Minuten eingeschaltet. Danach wird die zweite Dosierpumpe wieder ausgeschaltet und die erste Dosierpumpe wieder für ein Zeitinterval von 5 Stunden und 55 Minuten eingeschaltet. Dies heißt, daß die Transporteinrichtung jeweils für 5 Stunden und 55 Minuten mit dem auf Bandschmiermittelkonzentration eingestellten Produktkonzentrat und jeweils für 5 Minuten mit dem auf Reinigungs-/ Desinfektionskonzentration eingestellten Produktkonzentrat betrieben wird, ohne daß die Transporteinrichtung hierfür abgeschaltet werden muß. Bei dieser Durchführungsform wird die Transporteinrichtung also alle 6 Stunden gereinigt und desinfiziert, ohne den Abfüll- und Transportbetrieb zu unterbrechen. Enthält die Vorrichtung nur eine einzige Dosierpumpe, deren Dosierverhältnis von Bandschmiermittelkonzentration auf Reinigungs- / Desinfektionskonzentration umschaltbar ist, so läuft das Verfahren analog ab, wobei das Dosierverhältnis der Pumpe für die jeweils vorgesehenen Zeitabschnitte auf Bandschmiermittelkonzentration oder auf Reinigungs- / Desinfektionskonzentration eingestellt wird.

Vorzugsweise enthält die Vorrichtung weitere Düsen, mit denen die Unterseite der Transporteinrichtung und/oder Umlenkkästen der Transporteinrichtungen mit der auf Reinigungs- / Desinfektionskonzentration eingestellten wäßrigen Lösung beaufschlagt werden können. Hierdurch kann die Transporteinrichtung umfassend gereinigt und/oder desinfiziert werden. Dabei werden die Düsen an der Unterseite der Transporteinrichtungen und/oder in den Umlenkkästen nur während der Reinigungs- / Desinfektionsintervalle geöffnet.

Dabei werden alle Teile der Einrichtung gereinigt und/oder desinfiziert, die mit dem auf Reinigungs- / Desinfektionskonzentration eingestellten Produktkonzentrat in Kontakt kommen. Dies ist nicht nur das Förderband selbst, sondern auch das Leitungssystem und die zugehörigen Düsen.

Durch die vorliegende Erfindung wird es also möglich, unter Verwendung eines einzigen Produktkonzentrats Transporteinrichtungen kontinuierlich, d. h. für mindestens mehrere Tage zu betreiben, ohne daß eine Unterbrechung für Reinigungszwecke erforderlich ist. Demnach betrifft die Erfindung ganz allgemein ein Verfahren zum Betreiben einer Abfüllanlage für Behälter zur Aufnahme von Getränken oder Lebensmittel, bei denen die Behälter über Transporteinrichtungen gefördert werden, das einen kontinuierlichen Abfüll- und Transportbetrieb erlaubt, ohne daß eine Unterbrechung für Reinigungszwecke erforderlich ist.

Durch die Erfindung werden also folgende Vorteile erzielt:
1. Bandschmierung und Reinigung erfolgt mit einem einzigen Produkt in entsprechend eingestellter Verdünnung. Daher ist keine zusätzliche Lagerkapazität für ein getrenntes Reinigungs- / Desinfektionsmittel erforderlich.
2. Es ist nur ein einziges Leitungssystem für Kettengleitmittel und Reinigungs- /Desinfektionsmittel erforderlich.
3. Das Bandschmiersystem selbst wird bei den Reinigungsmaßnahmen mit erfaßt. Hierdurch wird verhindert, daß verkeimte Kettengleitmittellösungen auf die Transporteure aufgebracht werden.
4. Reinigung und/oder Desinfektion erfolgt ohne Störung oder Unterbrechung des Betriebsablaufs, so daß hierfür kein zusätzlicher Aufwand an Zeit und Personal anfällt. Ebenfalls entfallen Anfahrprobleme.

Die Erfindung führt also generell zu einer Erhöhung der Produktionskapazität, da der Zeitaufwand für das Reinigen / Desinfizieren und das erneute Anfahren der Anlage entfällt. Die Produktionssicherheit wird erhöht, da auch das Bandschmiersystem selbst von dem Reinigungs- / Desinfektionsvorgang erfaßt wird.

## Patentansprüche

1. Verfahren zur Schmierung sowie zur Reinigung und/oder Desinfektion von Abfüllanlagen für Behälter zur Aufnahme von Getränken oder Lebensmittel, **dadurch gekennzeichnet, daß** die Behälter Ober Transporteinrichtungen gefördert werden, die während des Betriebs zur Schmierung mit einer wäßrigen Lösung eines Bandschmiermittels in Kontakt gebracht werden, wobei diese wäßrige Lösung durch Verdünnen eines Produktkonzentrates mit Wasser um einen ersten Verdünnungsfaktor hergestellt wird und wobei nach vorgewählten Zeitintervallen ohne Unterbrechung des Abfüll- und Transportbetriebs die Transporteinrichtungen und/oder hiermit verbundenen Einrichtungen gereinigt und/oder desinfiziert werden, indem das Produktkonzentrat nach Verdünnen mit Wasser um einen zweiten Verdünnungsfaktor, der 5 bis 100 mal kleiner ist als der erste Verdünnungsfaktor, zum Reinigen und/oder Desinfizieren der Transporteinrichtungen und/oder von hiermit verbundenen Einrichtungen verwendet wird.

2. Verfahren nach Anspruch 1, **dadurch gekennzeichnet, daß** das Produktkonzentrat nach Verdünnen mit Wasser um einen zweiten Verdünnungsfaktor, der 5 bis 100 Mal kleiner ist als der erste Verdünnungsfaktor, mit einer Temperatur im Bereich von 5 bis 80 °C zum Reinigen und/oder Desinfizieren der Transporteinrichtungen und/oder von hiermit verbundenen Einrichtungen verwendet wird.

3. Verfahren nach einem oder beiden der Ansprüche 1 und 2, **dadurch gekennzeichnet, daß** das Produktkonzentrat
0,5 bis 99,5 Gew.-% einer oder mehrer Schmiekomponenten ausgewählt aus Etheraminen, Etherdiaminen, Etherpolyaminden, Mono-, Di- oder Polyaminen und Imidazolderivaten mit jeweils mindestens einem Alkylrest mit 6 bis 22 C-Atomen und/oder deren Salze und
0,5 bis 90 Gew.-% eines oder mehrerer Klarlöslichkeitsverbesserer ausgewählt aus Amphotensiden und Ethercarbonsäuren
enthält, wobei ein verbleibender Rest zu 100 Gew.-% aus Wasser und/oder weiteren Wirk- oder Hilfsstoffen besteht.

4. Verfahren nach Anspruch 3, **dadurch gekennzeichnet, daß** das Produktkonzentrat 1 bis 40 Gew.-%, vorzugsweise 3 bis 20 Gew.-%, einer oder mehrerer Schmierkomponenten ausgewählt aus Etheraminen, Etherdiaminen, Etherpolyaminen, Mono-, Di- oder Polyaminen und Imidazolderivaten mit jeweils mindestens einem Alkylrest mit 6 bis 22 C-Atomen und/oder deren Salze und
1 bis 50 Gew.-%, vorzugsweise 2 bis 20 Gew.-%, eines oder mehrerer Klarlöslichkeitsverbesserer ausgewählt aus Amphotensiden und Ethercarbonsäuren enthält, wobei der Rest zu 100 Gew.-% aus Wasser und/oder weiteren Wirk- oder Hilfsstoffen besteht.

5. Verfahren nach einem oder mehreren der Ansprüche 1 bis 4, **dadurch gekennzeichnet, daß** die Etheramine, Etherdiamine, Etherpolyamine, Mono-, Di- oder Polyamine und Imidazolderivate mit jeweils mindestens einem Alkylrest mit 6 bis 22 C-Atomen und/oder deren Salze ausgewählt sind aus Verbindungen der Gruppen
A)
R-NH-(CH₂)ᵣNH₂ (1a)
R-NH-(CH₂)ᵣ-N⁺H₃ X⁻ (1b)
R-N⁺H₂-(CH₂)ᵣ-N⁺H₃ 2X⁻ (1c),
B)
R-NH-[(CH₂)ᵣNH]_{y}-(CH₂)ₘ-NH₂ (2a)
R-NH-[(CH₂)ᵣ-NH]_{y}-(CH₂)ₘ-NH₂ (H⁺X⁻)ₙ ((2b)
C)
R-O-[(CH₂)ᵣ-NH]ₚ-(CH₂)ₘ-NH₂ (3a)
R-O-[(CH₂)ᵣ-NH]ₚ-(CH₂)ₘ-NH₂ · (H⁺X⁻)ₙ (3b)
**D)**
**R-NY**_{**2**} (4)
E) 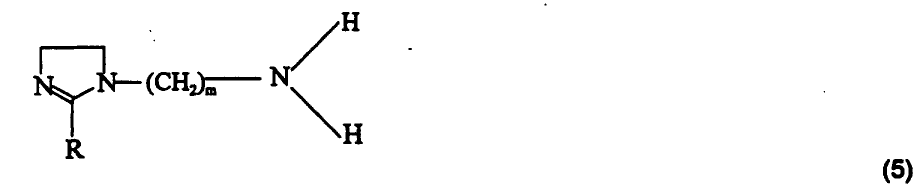
wobei die Reste R jeweils bedeuten:
einen linearen oder verzweigten, gesättigten oder einfach oder mehrfach ungesättigten Alkylrest mit 6 bis 22 C-Atomen,
Y unabhängig voneinander Wasserstoff oder eine Methylgruppe
X⁻ ein Äquivalent eines Anions aus der Gruppe Amidosulfonat, Nitrat, Halogenid, Sulfat, Hydrogencarbonat, Carbonat, Phosphat oder Carboxylat bedeutet,
m, r, y unabhängig voneinander eine ganze Zahl im Bereich von 1 bis 6,
p null oder eine ganze Zahl im Beeich von 1 bis 6 und
n in B) eine ganze Zahl im Bereich von 1 bis 2+y, in C) im Bereich von 1 bis 1+p darstellen.

6. Verfahren nach einem oder mehreren der Ansprüche 3 bis 5, **dadurch gekennzeichnet, daß** der oder die Klarlöslichkeitsverbesserer ausgewählt sind aus Ethercarbonsäuren der allgemeinen Formel
F)
H₂ₙ₊₁Cₙ-(O-CHY-CH₂)ₓ-O-(CH₂)_{y}-COOH, (6)
wobei Y Wasserstoff oder eine Methylgruppe, n eine Zahl zwischen 10 und 20, x eine Zahl zwischen 1 und 20 und y eine Zahl zwischen 1 und 5 bedeuten und aus Amphotensiden der allgemeinen Formeln
G) 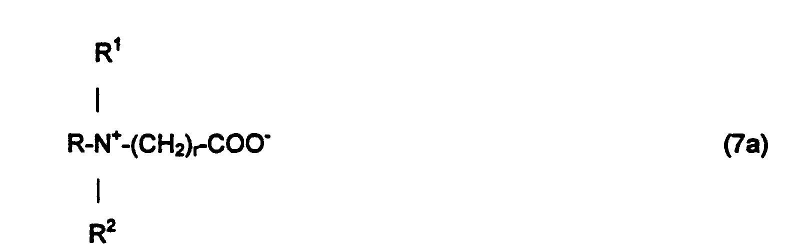 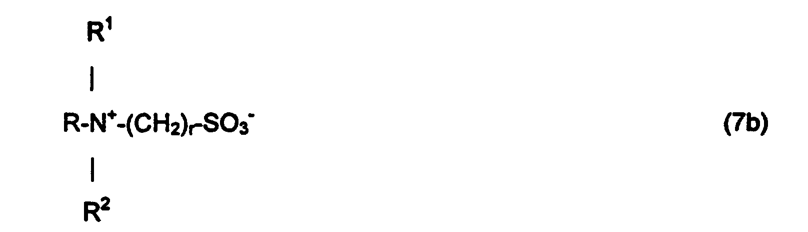 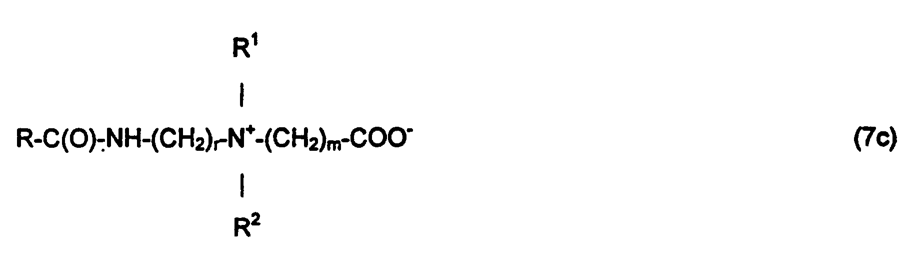 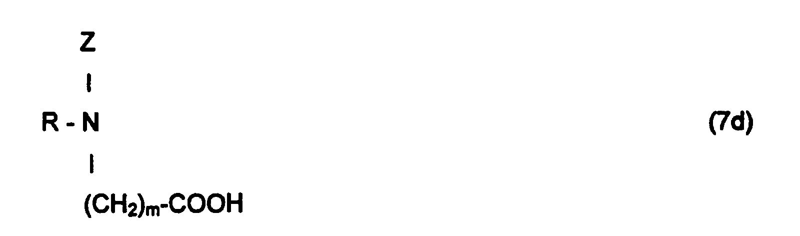
wobei die Reste R jeweils bedeuten:
einen linearen oder verzweigten, gesättigten oder einfach oder mehrfach ungesättigten Alkylrest mit 8 bis 22 C-Atomen,
Z für einen Rest R¹ oder eine Gruppe - (CH₂)ₘ - COOH steht,
R¹ und R² unabhängig voneinander Wasserstoff, Methyl-, Ethyl-, Hydroxyethyl- oder Alkoxylatgruppen bedeuten
und r und m unabhängig voneinander ganze Zahlen im Bereich 1 bis 6 darstellen.

7. Verfahren nach einem oder mehreren der Ansprüche 1 bis 6 unter Verwendung einer Vorrichtung, enthaltend
a) eine oder mehrere Düsen zum Beaufschlagen der Oberfläche der Transporteinrichtung mit einer wäßrigen Lösung,
b) eine oder mehrere Dosierstationen, versehen mit i) mindestens einer ersten Dosierpumpe in mindestens einer Dosierstation zum Einstellen der genannten wäßrigen Lösung auf Bandschmiermittelkonzentration, ii) mindestens einer zweiten Dosierpumpe in mindestens einer Dosierstation zum Einstellen der genannten wäßrigen Lösung auf Reinigungs- und/oder Desinfektionskonzentration, oder mit mindestens einer Dosierpumpe, deren Dosierverhältnis zum Einstellen der genannten wäßrigen Lösung auf Bandschmiermittelkonzentration und Reinigungs- und/oder Desinfektionskonzentration umgestellt werden kann,
c) ein Leitungssystem zum Transport der genannten wäßrigen Lösung von der Dosierstation zu den Düsen.

8. Verfahren nach Anspruch 7, wobei die Vorrichtung zusätzlich einen Wasserdurchflußmesser enthält.

9. Verfahren nach Anspruch 7 oder 8, wobei die Vorrichtung zusätzlich eine einstellbare Zeitschaltuhr umfaßt, die alternativ die erste oder die zweite Dosierpumpe an- und ausschaltet oder im Falle einer Dosierpumpe mit umstellbarem Dosierverhältnis die Einstellung der Bandschmiermittetkonzentration oder der Reinigungs- und/oder Desinfektionskonzentration steuert.

10. Verfahren nach einem oder mehreren der Ansprüche 7 bis 9, wobei die Vorrichtung weitere Düsen umfaßt, mit denen die Unterseite der Transporteinrichtungen und/oder Umlenk-Kästen der Transporteinrichtungen mit der wäßrigen Lösung beaufschlagt werden können.

## Claims

1. A method of lubricating and cleaning and/or disinfecting filling facilities for containers receiving beverages or foodstuffs, **characterized in that** the containers are conveyed on conveying devices which are brought into contact with an aqueous solution of a belt lubricant during operation for the purpose of lubrication, wherein said aqueous solution is produced by diluting a product concentrate with water at a first dilution factor, and wherein the conveying devices and/or the devices connected thereto are cleaned and/or disinfected at preselected time intervals and without interrupting the filling and conveying operation by using the product concentrate for cleaning and/or disinfecting the conveying devices and/or the devices connected thereto once said product concentrate has been diluted with water at a second dilution factor that is 5 to 100 times smaller than the first dilution factor.

2. The method according to claim 1, **characterized in that** the product concentrate, following dilution with water at a second dilution factor that is 5 to 100 times smaller than the first dilution factor, is used at a temperature ranging from 5 to 80°C for cleaning and/or disinfecting the conveying devices and/or the devices connected thereto.

3. The method according to one or both of claims 1 and 2, **characterized in that** the product concentrate includes
0.5 to 99.5 wt.-% of one or more lubricating components selected from ether amines, ether diamines, ether polyamines, mono-, di- or polyamines, and imidazole derivatives, each having at least one alkyl residue with 6 to 22 C atoms, and/or salts thereof, and
0.5 to 90 wt.-% of one or more transparent solubility enhancers selected from amphoteric surfactants and ether carboxylic acids,
the balance to make 100 wt.-% being water and/or other active or auxiliary substances.

4. The method according to claim 3, **characterized in that** the product concentrate includes
1 to 40 wt.-%, preferably 3 to 20 wt.-%, of one or more lubricating components selected from ether amines, ether diamines, ether polyamines, mono-, di- or polyamines, and imidazole derivatives, each having at least one alkyl residue with 6 to 22 C atoms, and/or salts thereof, and
1 to 50 wt.-%, preferably 2 to 20 wt.-%, of one or more transparent solubility enhancers selected from amphoteric surfactants and ether carboxylic acids,
the balance to make 100 wt.-% being water and/or other active or auxiliary substances.

5. The method according to one or more of claims 1 to 4, **characterized in that** the ether amines, ether diamines, ether polyamines, mono-, di- or polyamines, and imidazole derivatives, each having at least one alkyl residue with 6 to 22 C atoms, and/or salts thereof are selected from compounds of the groups
A)
R-NH-(CH₂)ᵣNH₂ (1a)
R-NH-(CH₂)ᵣ-N⁺H₃ X⁻ (1b)
R-N⁺H₂-(CH₂)ᵣ-N⁺H₃2X⁻ (1c),
B)
R-NH-[(CH₂)ᵣNH]_{y}-(CH₂)ₘ-NH₂ (2a)
R-NH-[(CH₂)ᵣ-NH]_{y}(CH₂)ₘ-NH₂ (H⁺X⁻)ₙ (2b)
C)
R-O-[(CH₂)ᵣ-NH]ₚ-(CH₂)ₘ-NH₂ (3a)
R-O-[(CH₂)ᵣ-NH]ₚ-(CH₂)ₘ-NH₂ (H⁺X⁻)ₙ (3b),
D)
R-NY₂ (4)
E) 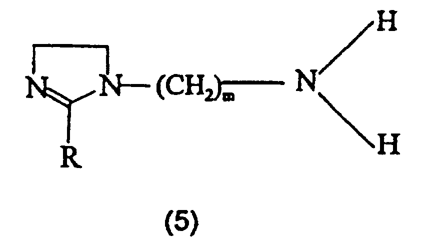
wherein each R residue represents:
a linear or branched, saturated or mono- or polyunsaturated alkyl residue with 6 to 22 C atoms,
Y independently represents hydrogen or a methyl group,
X⁻ represents an equivalent of an anion from the group of amidosulfonate, nitrate, halide, sulfate, hydrogen carbonate, carbonate, phosphate, or carboxylate,
m, r, y independently represent an integer ranging from 1 to 6,
p is zero or an integer ranging from 1 to 6, and
n represents an integer ranging from 1 to 2+y in B) and from 1 to 1+p in C).

6. The method according to one or more of claims 3 to 5, **characterized in that** the transparent solubility enhancer(s) is/are selected from ether carboxylic acids of general formula
F)
H₂ₙ₋₁Cₙ-(O-CHY-CH₂)ₓ-O-(CH₂)_{y}-COOH (6),
wherein Y represents hydrogen or a methyl group, n is a number between 10 and 20, x is a number between 1 and 20, and y is a number between 1 and 5, and
amphoteric surfactants of general formulae
G) 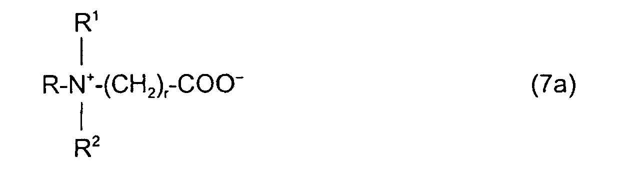 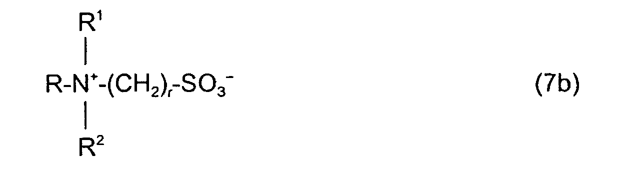 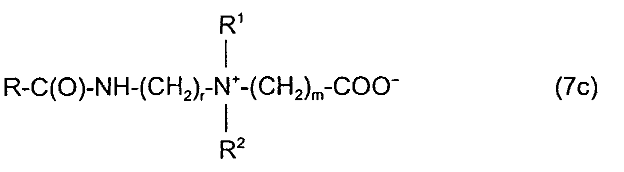 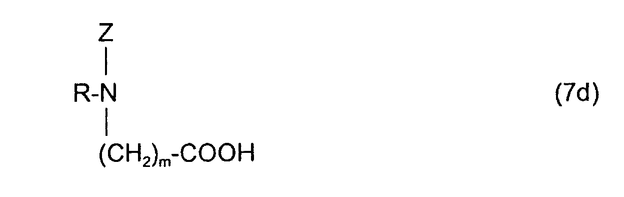
wherein each R residue represents:
a linear or branched, saturated or mono- or polyunsaturated alkyl residue with 6 to 22 C atoms,
Z represents a residue R¹ or a group -(CH₂)ₘ-COOH,
R¹ and R² independently represent hydrogen, methyl, ethyl, hydroxyethyl or alkoxylate groups, and
r and m independently represent integers ranging from 1 to 6.

7. The method according to one or more of claims 1 to 6, using a device including
a) one or more nozzles to supply an aqueous solution to the surface of the conveying devices,
b) one or more metering stations provided with i) at least one first metering pump in at least one metering station to adjust said aqueous solution to belt lubricating concentration, ii) at least one second metering pump in at least one metering station to adjust said aqueous solution to cleaning and/or disinfecting concentration, or with at least one metering pump whose metering ratio can be switched for adjusting said aqueous solution to belt lubricating concentration and cleaning and/or disinfecting concentration,
c) a pipe system to convey said aqueous solution from the metering station to the nozzles.

8. The method according to claim 7, wherein the device additionally includes a water flow-meter.

9. The method according to claim 7 or 8, wherein the device additionally includes an adjustable time-switch clock which alternately switches on and off the first or second metering pump, or, in the event of a metering pump with switchable metering ratio, controls the adjustment of the belt lubricant concentration or cleaning/disinfecting concentration.

10. The method according to one or more of claims 7 to 9, wherein the device includes additional nozzles by means of which the aqueous solution can be supplied to the underside of the conveying devices and/or deflector boxes of the conveying devices.

## Revendications

1. Procédé de lubrification ainsi que de nettoyage et/ou de désinfection d'installations de remplissage pour récipients destinés à recevoir des boissons ou des aliments,
**caractérisé en ce que**
les récipients sont transportés par des dispositifs de transport, qui au cours du fonctionnement sont mis en contact avec une solution aqueuse d'un lubrifiant de bande aux fins de lubrification, cette solution aqueuse étant produite par dilution d'un concentré de produit avec de l'eau d'un premier facteur de dilution, et où après des intervalles de temps présélectionnés, sans interruption de l'opération de remplissage et de transport, les dispositifs de transport et/ou les dispositifs qui y sont liés sont nettoyés et/ou désinfectés, en utilisant le concentré de produit après dilution avec de l'eau d'un second facteur de dilution, qui est de 5 à 100 fois inférieur au premier facteur de dilution pour le nettoyage et/ou la désinfection des dispositifs de transport et/ou les dispositifs qui y sont liés.

2. Procédé selon la revendication 1,
**caractérisé en ce que**
le concentré de produit après dilution avec de l'eau d'un second facteur de dilution, qui est inférieur de 5 à 100 fois au premier facteur de dilution, est utilisé avec une température allant de 5 à 80°C, pour le nettoyage et/ou la désinfection des dispositifs de transport et/ou des dispositifs qui y sont liés.

3. Procédé selon l'une des revendications 1 ou 2, ou les deux,
**caractérisé en ce que**
le concentré de produit contient
de 0,5 à 99,5 % en poids d'un ou plusieurs composants de lubrification choisis parmi les étheramines, les étherdiamines, les étherpolyamines, les mono-, di- ou polyamines et les dérivés d'imidazole avec à chaque fois un radical alkyle comportant de 6 à 22 atomes de carbone et/ou leurs sels et
de 0,5 à 90 % en poids d'un ou plusieurs agents d'amélioration de la solubilité jusqu'à clarification, choisis parmi les agents tensioactifs amphotères et les acides éther carboxyliques,
le reste subsistant jusqu'à 100 % en poids se composant d'eau ou d'autres substances actives ou adjuvants.

4. Procédé selon la revendication 3,
**caractérisé en ce que**
le concentré de produit contient de 1 à 40 % en poids, de préférence de 3 à 20 % en poids, d'un ou plusieurs composants de lubrifications choisis parmi les étheramines, les étherdiamines, les étherpolyamines, les mono-, di- ou polyamines et les dérivés d'imidazole avec à chaque fois au moins un radical alkyle comportant de 6 à 22 atomes de carbone et/ou leurs sels et de 1 à 50 % en poids, de préférence de 2 à 20 % en poids, d'un ou plusieurs agents améliorant la solubilité jusqu'à clarification choisis parmi les agents tensioactifs amphotères et les acides éther carboxylique, le reste jusqu'à 100 % étant constitué d'eau ou d'autres substance actives ou adjuvants.

5. Procédé selon une ou plusieurs des revendications 1 à 4,
**caractérisé en ce que**
les étheramines, étherdiamines, étherpolyamines, mono-, di- ou polyamines et dérivés d'imidazole avec à chaque fois au moins un radical alkyle comportant de 6 à 22 atomes de carbone et/ou leurs sels sont choisis parmi les composés des groupes suivants :
A)
R-NH-(CH₂)ᵣNH₂ (1a)
R-NH-(CH₂)ᵣ-N⁺H₃X⁻ (1b)
R-N⁺H₂-(CH₂)ᵣ-N⁺H₃ 2X⁻ (1c)
B)
R-NH-[(CH₂)ᵣ-NH]_{y}-(CH₂)ₘ-NH₂ (2a)
R-NH-[(CH₂)ᵣ-NH]_{y}-(CH₂)ₘ-NH₂ (H⁺X⁻)ₙ (2b)
C)
R-O[(CH₂)ᵣ-NH]ₚ-(CH₂)ₘ-NH₂ (3a)
R-O[(CH₂)ᵣ-NH]ₚ-(CH₂)ₘ-NH₂.(H⁺X⁻ )ₙ (3b)
D)
R-NY₂ (4)
E) 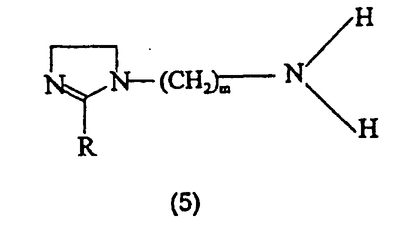
les radicaux R représentant à chaque fois :
un radical alkyle, linéaire ou ramifié, saturé ou mono- ou polyinsaturé, comportant de 6 à 22 atomes de carbone,
les Y représentent indépendamment l'un de l'autre un hydrogène ou un groupe méthyle,
X⁻ représente un équivalent d'un anion du groupe amidosulfonate, nitrate, halogénure, sulfate, carbonate acide, carbonate, phosphate ou carboxylate,
m, r, y, représentent indépendamment l'un de l'autre un nombre entier allant de 1 à 6,
p vaut 0 ou un nombre entier allant de 1 à 6 et
n dans B) représente un nombre entier allant de 1 à 2+y, dans C) dans un intervalle allant de 1 à 1 +p.

6. Procédé selon l'une des revendications 3 à 5,
**caractérisé en ce que**
le ou les agents améliorant la solubilité aux fins de clarification sont choisis parmi les acides éther carboxyliques de formule générale
F)
H₂ₙ₊₁Cₙ-(O-CHY-CH₂)ₓ-O-(CH₂)_{y}-COOH, (6)
dans laquelle Y représente un hydrogène ou un groupe méthyle, n représente un nombre entier compris entre 10 et 20, x représente un nombre compris entre 1 et 20 et y représente un nombre compris entre 1 et 5, et des agents tensioactifs amphotères de formules générales
G) 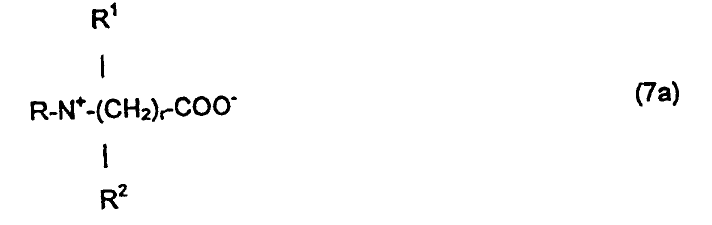 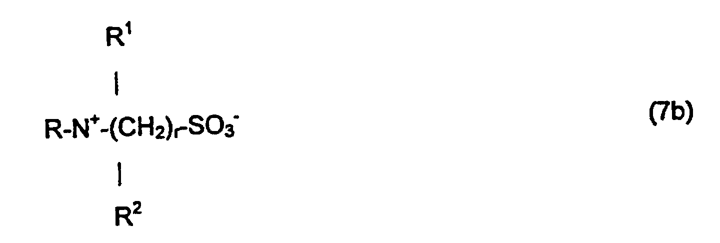 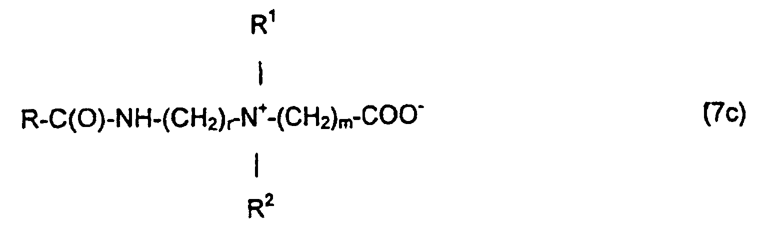 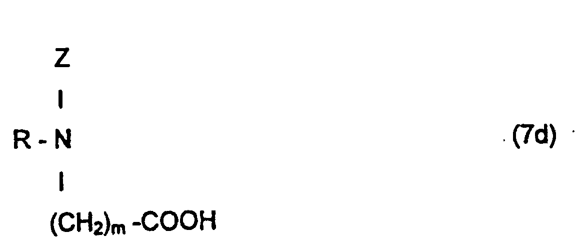
les radicaux R représentant à chaque fois :
un radical alkyle linéaire ou ramifié, saturé ou mono- ou polyinsaturé, comportant de 8 à 22 atomes de carbone,
Z représente un radical R¹ ou un groupe -(CH₂)ₘ-COOH,
R¹ et R² représentent indépendamment l'un de l'autre hydrogène, des groupes méthyle, un éthyle, un hydroxyéthyle ou un alcoxylate,
et r et m représentent indépendamment l'un de l'autre des nombres entiers allant de 1 à 6.

7. Procédé selon une ou plusieurs des revendications 1 à 6 utilisant un dispositif contenant :
a) une ou plusieurs buses pour l'alimentation de la surface des dispositifs de transport avec une solution aqueuse,
b) un ou plusieurs postes de dosage, munis de : i) au moins une première pompe de dosage dans au moins un poste de dosage pour établir la solution aqueuse mentionnée à la concentration d'agent lubrifiant à bande, ii) au moins une seconde pompe de dosage dans au moins un poste de dosage pour établir la solution aqueuse mentionnée à la concentration de nettoyage et/ou de désinfection, avec au moins une pompe de dosage dont le rapport de dosage peut être modifié pour réguler la solution aqueuse mentionnée à la concentration de lubrification de bande et à la concentration de nettoyage et/ou de désinfection,
c) un système de transport pour le transport de la solution aqueuse mentionnée du poste de dosage aux buses.

8. Procédé selon la revendication 7,
selon lequel le dispositif contient en outre un débitmètre d'eau.

9. Procédé selon la revendication 7 ou 8,
selon lequel le procédé comprend en outre un chronomètre réglable qui met en marche et arrête alternativement la première ou la seconde pompe de dosage, ou dans le cas d'une pompe de dosage avec rapport de dosage modifiable, règle l'établissement de la concentration d'agent lubrifiant de bande, ou de la concentration de nettoyage et/ou de désinfection.

10. Procédé selon une ou plusieurs des agents 7 à 9,
selon lequel le dispositif comprend d'autres buses avec lesquelles on peut alimenter le côté inférieur des dispositifs de transport et/ou des boîtes de changement de direction des dispositifs de transport avec la solution aqueuse.
